# EUROPEAN PATENT APPLICATION

(11) **EP 0 560 552 A2**
(43) Date of publication of application: **15.09.1993**
(21) Application number: 93301727.9
(22) Date of filing: 08.03.1993
(51) Int. Cl.: F23C 11/04, A47J 37/12

(54) **Portable fryer apparatus**

(30) Priority: 09.03.1992 JP 86328/92
(71) Applicant: PALOMA KOGYO KABUSHIKI KAISHA, Nagoya-shi (JP)
(72) Inventor: Yokoyama, Nobuyoshi, Toyoake-shi, Aichi-pref. (JP); Ejiri, Susumu, Toyoake-shi, Aichi-pref. (JP)
(74) Representative: Harvey, David Gareth

(57) **Abstract**

A portable fryer apparatus (1) includes a small size pulse combustor (30) as a heat source for heating cooking oil in a frypot (10); the pulse combustor of the invention is devoid of any check valve or flapper valve for preventing back flow of combustion exhaust into its air supply system (16, 18). This valve-free structure of the pulse combustor (30) ensures sufficient noise reduction that silencers or mufflers for the air system are unnecessary, and makes the portable fryer apparatus sufficiently small and compact for home cooking applications.

## Description

The present invention relates to a portable fryer apparatus including a pulse combustor as a heat source.

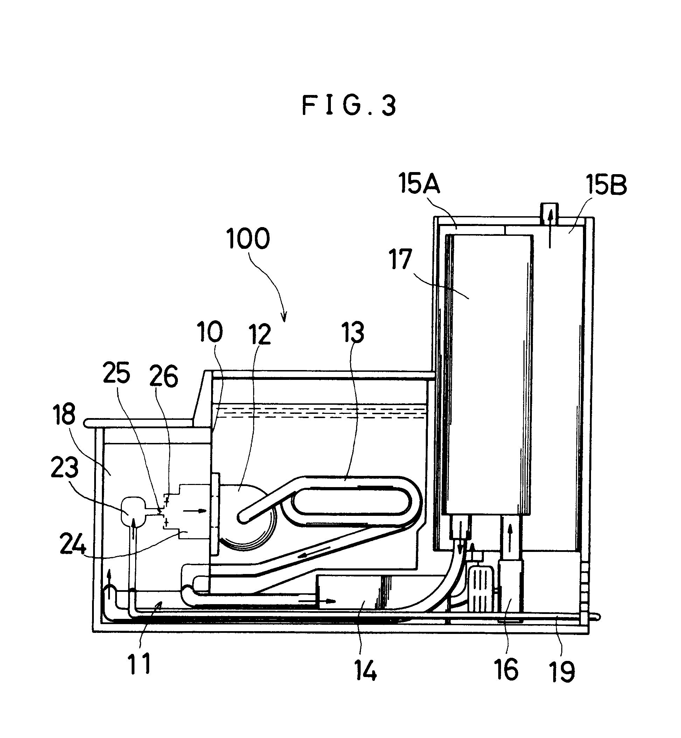

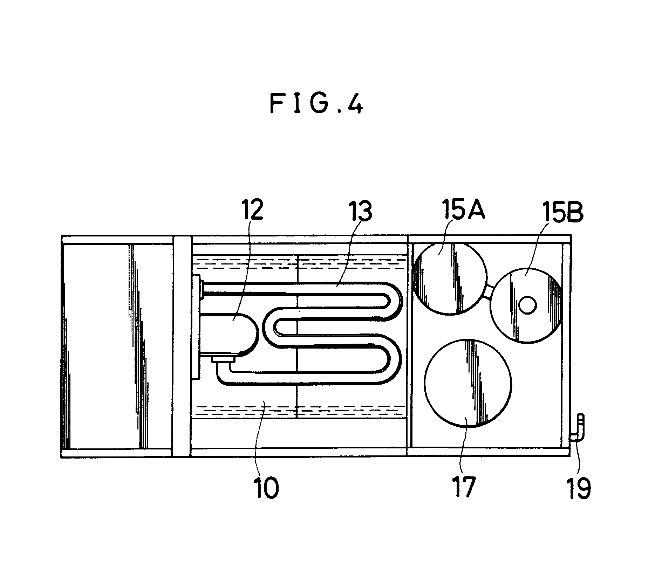

Portable fryer apparatuses having pulse combustors with high thermal efficiency as heat sources have widely been used for deep fat frying of various food items. The pulse combustor repeats explosion and combustion at a certain cycle so as to heat cooking oil contained in a frypot with heat transmitted through a combustion chamber and tail pipe wall. The structure of such conventional fryer apparatus will now be briefly explained with reference to the side view of Fig. 3 and the plan view of Fig. 4 of the accompanying drawings.

A conventional portable fryer apparatus 100 includes: a frypot 10 which is filled with cooking liquid or oil for deep fat frying; and a pulse combustor 11 for heating the cooking oil contained in the frypot 10. The pulse combustor 11 has a combustion-exhaust system, an air supply system, and a fuel gas supply system.

The combustion-exhaust system includes: a combustion chamber 12 disposed in the frypot 10 for pulse combustion; a tail pipe 13 constituting an exhaust conduit of hot combustion byproducts from the combustion chamber 12; an exhaust decoupler 14 connecting to the tail pipe 13 and being placed under the frypot 10; and two exhaust mufflers 15Aand 15B coupled with the exhaust decoupler 14.

The air supply system for supplying air to the combustion chamber 12 includes: a fan 16 feeding the air for combustion; an intake muffler 17 connecting to the fan 16 in the air flow path and placed in parallel with the exhaust mufflers 15A and 15B; and an air chamber 18 coupled to the combustion chamber 12 for receiving the air fed through the intake muffler 17.

The fuel gas supply system includes: a gas conduit 19 for supply of fuel gas, and a gas chamber 23 disposed in the air chamber 18. The gas conduit 19 is provided in the middle thereof with electromagnetic valves (not shown) for opening and closing a flow path of fuel gas and a gas governor (not shown) for adjusting the gas pressure. Elements in the air chamber 18 are drawn by the thin lines for clarification.

The fuel gas supplied into the gas chamber 23 and the air supplied into the air chamber 18 are mixed with each other in a mixing chamber 24 arranged in the intake side of the combustion chamber 12. A mixture of the air and the fuel gas is then fed into the combustion chamber 12 at which the mixture is ignited and explosively combusted. The negative pressure generated after the explosion allows further admission of the fuel gas and the air for the subsequent combustion. Heat generated in such a cyclic explosion and combustion is applied through the wall of the combustion chamber 12 and of the tail pipe 13 to heat cooking oil in the frypot 10.

The pulse combustor 11 is further provided with a gas flapper valve 25 and an air flapper valve 26 respectively mounted at the inlets of the fuel gas and the air into the mixing chamber 24 to prevent back flow of combustion exhaust into the air supply system or the fuel gas supply system due to explosive combustion. These flapper valves 25, 26 close in response to the combustion pressure for preventing the back flow and open in response to the negative pressure generated immediately after the explosive combustion to feed the gas and the air to the mixing chamber 24.

In the pulse combustor 11 thus constructed, there is undesirably large noise due to opening and closing of the gas flapper valve 25 and the airflapper valve 26, along with combustion noise due to high combustion pressure. The conventional portable fryer apparatus 100 thus includes silencers for noise reduction, that is, the intake muffler 17 and the exhaust mufflers 15A and 15B, which occupy relatively large space and thereby make the portable fryer apparatus 100 itself undesirably large. The portable fryer apparatus 100 is generally used on a cooking counter in the kitchen. The conventional portable fryer apparatus 100 has a depth (the width in Fig. 4) of approximately 750 millimeter, which requires a relatively deep counter.

An object of the invention is to provide an improved portable fryer apparatus which includes a smaller-sized pulse combustor as a heat source.

Another object of the invention is to provide a space-saving portable fryer apparatus.

The above and other related objects are realized by a portable fryer apparatus, wherein cooking oil in a frypot is heated by means of a pulse combustor, which includes: a combustion chamber for receiving a mixture of air and fuel gas for pulsative combustion of the mixture; a mixing chamber being coupled with and connected to the combustion chamber for mixing air and fuel gas and supplying the air/fuel mixture to the combustion chamber; an air supply system for supplying the air to the mixing chamber; and a fuel gas supply system for supplying fuel gas to the mixing chamber. The improvement of the invention is characterized in that the air supply system of the pulse combustor does not have a check valve for preventing back flow of combustion exhaust into the air supply system. The air supply system instead has an ever-on fan for continuously feeding the air to the mixing chamber and for diluting combustion exhaust back flown to the mixing chamber with air/fuel mixture and supplying the exhaust-containing air/fuel mixture to the combustion chamber. The fuel gas supply system may also be free of a check valve for preventing back flow of combustion exhaust into the fuel gas supply system.

Since the pulse combustor in the portable fryer apparatus of the invention does not include a check valve in the air supply system, there is no opening or closing noise. The lower combustion pressure of such pulse combustor further reduces the combustion noise. The ensuing noise elimination or reduction allows silencers or mufflers to be removed from or at least down-sized in the pulse combustor, thereby making the portable fryer apparatus itself favorably small and compact.

These and other objects, features, aspects, and advantages of the present invention will become more apparent from the following non-limitative description of the preferred embodiment shown in the accompanying drawings. In the drawings:
Fig. 1 is a schematic side view showing a portable fryer apparatus embodying the invention;

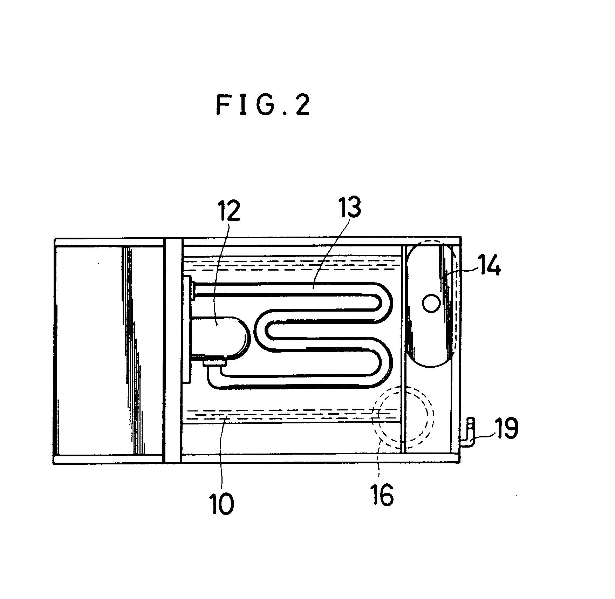

Fig. 2 is a plan view showing the portable fryer apparatus of Fig. 1;
Fig. 3 is a schematic side view showing a conventional portable fryer apparatus; and
Fig. 4 is a plan view showing the conventional portable fryer apparatus of Fig. 3.

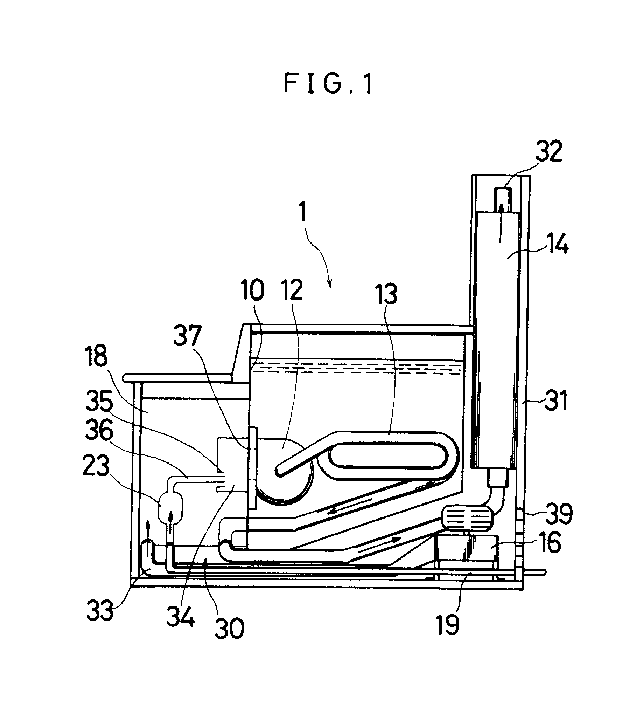

Fig. 1 is a side view (side-panel omitted) schematically showing a portable fryer apparatus embodying the invention. In the description below, the same elements as those in the prior art fryer apparatus explained according to Figs. 3 and 4 have the same numerals.

A portable fryer apparatus 1 includes a frypot 10 which is filled with cooking oil, a pulse combustor 30 for heating cooking oil in the frypot 10, and a casing 31 for accommodating the frypot 10 and the pulse combustor 30. The pulse combustor 30 has a combustion-exhaust system, an air supply system, and a fuel gas supply system.

The combustion-exhaust system includes: a combustion chamber 12 disposed in the frypot 10 for pulse combustion; a tail pipe 13 constituting an exhaust conduit of hot combustion byproducts from the combustion chamber 12; an exhaust decoupler 14 connecting to the tail pipe 13; and an exhaust conduit 32 coupled with the exhaust decoupler 14. The portable fryer apparatus 1 of the embodiment does not have exhaust mufflers 15A and 15B which the conventional portable fryer apparatus 100 includes as mentioned above.

The air supply system for supplying air to the combustion chamber 12 includes: an admission opening 39 formed on the lower portion of the rear panel of the casing 31; a fan 16 feeding the air for combustion via the admission opening 39; an intake conduit 33 through which the air fed by the fan 16 flows; and an air chamber 18 coupled to the combustion chamber 12 for receiving the air fed through the intake conduit 33. The portable fryer apparatus 1 of the embodiment does not have an intake muffler 17 which the conventional fryer apparatus 100 includes as mentioned above.

The fuel gas supply system includes: a gas conduit 19 arranged in the lower portion of the casing 31; a gas chamber 23 disposed in the air chamber 18; electromagnetic valves (not shown) mounted in the middle of the gas conduit 19 for opening and closing a flow path of fuel gas; and a gas governor (not shown) for adjusting the gas pressure.

Elements in the air chamber 18 are drawn by the thin lines for clarification. In the air chamber 18, there is, along with the gas chamber23, a cylindrical mixing chamber 34 connected to and coupled with the combustion chamber 12. The mixing chamber 34 has a tubular second opening 35 formed at a position apart from the axial center of the chamber 34. An L-shaped gas supply conduit 36 for supplying fuel gas goes through the air chamber 18 and has one end projecting into the mixing chamber 34 via the second opening 35. Fuel gas is thus supplied into the mixing chamber 34 via the gas chamber 23 and the second opening 35, while the air is supplied into the mixing chamber 34 via the air chamber 18 and the second opening 35.

The mixing chamber 34 and the combustion chamber 12 are connected to each other via a first opening 37. Aflame trap (not shown) is fitted into the first opening 37 to prevent back fire from the combustion chamber 12 to the mixing chamber 34. An ignition plug (not shown) for igniting mixture of air and fuel gas and a flame rod (not shown) for detecting the flame are further mounted on the wall of the combustion chamber 12.

The pulse combustor 30 of the embodiment does not include any check valve or flapper valve, unlike the conventional pulse combustor 11. Hot, highpressure combustion exhaust is thus partly flown back to the mixing chamber 34, while being mostly discharged through the tail pipe 13 by the explosion pressure. The ever-on fan 16 continuously feeds the air to dilute the back flown combustion exhaust with air/fuel mixture and supply the exhaust-containing air/fuel mixture to the combustion chamber 12. Adverse effects of the back pressure due to the explosive combustion are sufficiently reduced by the air chamber 18, the gas chamber23, the eccentric structure of the second opening 35 of the mixing chamber 34 with respect to the first opening 37, and the L-hap- ed structure of the gas supply conduit 36.

The pulse combustor 30 of the embodiment accordingly attains favorable pulse combustion without a flapper valve or check valve for preventing the back flow, thus being free from undesirable opening or closing noise of the valve. The lower combustion pressure further reduces the combustion noise. The pulse combustor 30 thereby does not require any silencers such as an inlet muffler and an exhaust muffler which have conventionally been required.

The structure of the embodiment sufficiently reduces the depth of the portable fryer apparatus 1 (for example, down to 600 millimeter in depth), and makes the fryer apparatus 1 small and compact suitably for the home cooking application. Furthermore, removal of silencers allows the fryer apparatus 1 to be manufactured at a relatively low cost.

Although the pulse combustor of the embodiment does not include any mufflers, one or plural small size mufflers may be included to attain the similar effects. The pulse combustor of the embodiment includes neither an airflappervalve nor gas flapper valve, but the fuel gas supply system may include a gas flapper valve according to the requirement.

Since there may be many modifications, changes, and alterations without departing from the scope of appended claims, it is to be clearly understood that the above embodiment is only illustrative and not restrictive in any sense.

## Claims

1. A portable fryer apparatus (1) wherein cooking oil in a frypot (10) is heated by means of a pulse combustor (30) comprising: a combustion chamber (12) for receiving a mixture of air and fuel gas for pulsative combustion of the mixture; a mixing chamber (34) being coupled with and connected to said combustion chamber (12) for mixing air and fuel gas and supplying the air/fuel mixture to said combustion chamber; an air supply system (16,18) for supplying the air to said mixing chamber; and a fuel gas supply system for supplying fuel gas to said mixing chamber; the air supply system (16, 18) of said pulse combustor (30) being free of any check valve for preventing back flow of combustion exhaust into said air supply system.

2. A fryer apparatus in accordance with claim 1, wherein the air supply system of said pulse combustor (30) has an ever-on fan (16) for continuously feeding the air to said mixing chamber (34) so as to dilute combustion exhaust which may back flow to said mixing chamber with air/fuel mixture, and to supply the exhaust-containing air/fuel mixture to said combustion chamber (12).

3. A fryer apparatus in accordance with claim 1 or claim 2, wherein the fuel gas supply system of said pulse combustor (30) is free of any check valve for preventing back flow of combustion exhaust into the fuel gas supply system.

4. A portable fryer apparatus (1) wherein cooking oil in a frypot (10) is heated by means of a pulse combustor (30) in which the pulse combustor (30) comprises a combustion chamber (12) for receiving a mixture of air and fuel gas for pulsative combustion; at least one tail pipe (13) coupled to the combustion chamber for discharging combustion exhaust from the combustion chamber; an exhaust decoupler (14) coupled with said tail pipe (13); a mixing chamber (34) being coupled with and connected to said combustion chamber (12) via a first opening (37) having a flame trap, for mixing the air and fuel gas and supplying an air/fuel mixture to said combustion chamber; an air chamber (18) being coupled with and connected to said mixing chamber (34) via a second opening (35) formed on a face opposite to said first opening (37), for supplying the air to said mixing chamber; a gas supply conduit (19) for supplying the fuel gas to said mixing chamber (34), said gas supply conduit going through said air chamber and having one end projecting to connect with said mixing chamber (34) via said second opening (35); and an ever-on fan (16) for continuously feeding the air to said mixing chamber (34) so as to dilute combustion exhaust which may back flow to said mixing chamber with air/fuel mixture, and to supply the exhaust-containing air/fuel mixture to said combustion chamber.

5. A fryer apparatus in accordance with claim 4, wherein said second opening (35) is positioned eccentrically with respect to said first opening (37).
